# EUROPÄISCHE PATENTANMELDUNG

(11) **EP 0 989 248 A2**
(43) Veröffentlichungstag der Anmeldung: **29.03.2000**
(21) Anmeldenummer: 99118392.2
(22) Anmeldetag: 16.09.1999
(51) Int. Cl.: E03F 5/16

(54) **Einrichtung zur sperre des Wasserablaufes eines Leichtflüssigkeitsabscheiders**

(30) Priorität: 23.09.1998 AT 158898
(71) Anmelder: Ortner, Heinrich, 9900 Lienz (AT)
(72) Erfinder: Ortner, Heinrich, 9900 Lienz (AT); Holzer, Tiburtius, 9951 Ainet (AT)
(74) Vertreter: Torggler, Paul Norbert

(57) **Zusammenfassung**

Zur Sperre des Wasserablaufes eines Leichtflüssigkeitsabscheiders, der ein Ablaufsteigrohr (1) mit einer Eintrittsöffnung (3) unterhalb eines minimalen Wasserspiegels (25) aufweist, ist ein von einem Schwimmer (9) bewegtes Sperrelement (4) vorgesehen. Die Eintrittsöffnung (3) ist am unteren Ende des Ablaufsteigrohres (1) vorgesehen, und das Sperrelement (4) ist unterhalb der Eintrittsöffnung (3) angeordnet. Der Schwimmer (9) und das Sperrelement (4) sind am Ablaufsteigrohr (1) gegenläufig beweglich geführt, wobei der absinkende Schwimmer (9) das Sperrelement (4) anhebt.

## Beschreibung

Die Erfindung betrifft eine Einrichtung zur Sperre des Wasserablaufes eines Leichtflüssigkeitsabscheiders, mit einer Wassereintrittsöffnung am unteren Ende eines Ablaufsteigrohres, mit einem neben dem Ablaufsteigrohr angeordneten Schwimmer und mit einem mit dem Schwimmer verbundenen Sperrelement, das unterhalb der Wassereintrittsöffnung angeordnet ist und diese verschließt, wenn eine maximale Dicke der Leichtflüssigkeitsschicht erreicht ist.

Ein Leichtflüssigkeitsabscheider mit einer derartigen Einrichtung ist beispielsweise der DE 297 08 916 U zu entnehmen. Dabei ist auch der Verschlußkörper durch einen Schwimmer gebildet, der über ein Gestänge von dem dem Wasserspiegel folgenden Schwimmer in Offenstellung gehalten wird. Sobald der Wasserstand auf das vorgesehene Minimum gesunken ist, gibt das Gestänge den Verschlußkörper frei, der nach oben steigt und die Ablauföffnung verschließt. Für die Wiederöffnung des Wasserablaufs nach Entnahme der Leichtflüssigkeit ist eine Betätigungsstange vorgesehen, die direkt auf den Verschlußkörper einwirkt.

Weitere Leichtflüssigkeitsabscheider (DE 520 773 A, US 4,132,238 A) weisen einen dem Ablaufsteigrohr vorgesetzten unteren horizontalen Abschnitt auf, in dem eine nach oben offene Eintrittsöffnung für das ausfließende Wasser vorgesehen ist. Oberhalb der Eintrittsöffnung ist ein mit einem Schwimmer direkt verbundenes Sperrelement für die Eintrittsöffnung vorgesehen. Mit dem Ansteigen der Leichtflüssigkeitsschicht sinkt die Wasseroberfläche, also die Trennfläche zwischen dem Wasser und der darüber liegenden Leichtflüssigkeit und das mit dem absinkenden Schwimmer absinkende Sperrelement verschließt die Eintrittsöffnung, sodaß der Ablauf gesperrt ist.

Die nach oben offene Eintrittsöffnung in einem dem Ablaufsteigrohr vorgesetzten horizontalen Abschnitt bedeutet durch eine zweifache Umlenkung des Abwassers um jeweils 90° einen zusätzlichen Fließwiderstand, bis das Wasser ins Ablaufsteigrohr gelangt. Dies kann die Funktionsfähigkeit beeinflussen, beispielsweise durch einen früher auftretenden Abflußrückstau, durch eine Verringerung der Leichtflüssigkeitsabscheidestrecke zwischen Einlaß und Ablauf, usw.

Die Erfindung hat es sich daher zur Aufgabe gemacht, bei einem Leichtflüssigkeitsabscheider mit einer Wassereintrittsöffnung am unteren Ende eines Steigrohres einen durch den Schwimmer zwangsgeführten Verschluß auszubilden.

Erfindungsgemäß wird dies dadurch erreicht, daß am Ablaufsteigrohr eine zweiarmige Hebelanordnung vorgesehen ist, an der der Schwimmer und das Sperrelement angeordnet sind. Der Schwimmer und das Sperrelement am Ablaufsteigrohr sind somit entgegengesetzt zwangsgeführt, d.h. sinkt der Schwimmer dem Wasserspiegel folgend ab, wird das Sperrelement angehoben, bis die Öffnung verschlossen wird.

In einer bevorzugten Ausführung ist vorgesehen, daß die zweiarmige Hebelanordnung zwei am Ablaufsteigrohr zueinander parallel angelenkte Hebel aufweist, zwischen deren ersten Enden der Schwimmer angeordnet ist, und an deren zweiten Enden sich im wesentlichen vertikal nach unten erstreckende Verbindungsstangen angelenkt sind, an denen das Sperrelement angeordnet ist.

Alternativ können der Schwimmer und das Sperrelement auch über einen umgelenkten Seilzug od.dgl. miteinander verbunden sein.

Wenn aufgrund der vorgegebenen Höhe der Leichtflüssigkeitsschicht das Sperrelement das Ablaufsteigrohr verschlossen hat, wird die Leichtflüssigkeit entfernt. Aufgrund des unterschiedlichen hydrostatischen Druckes beidseitig des Sperrelementes öffnet dieses anschließend nicht selbsttätig, sondern muß durch äußere Einflüsse geöffnet werden. Eine bevorzugte Ausführung sieht eine Schließstellungslöseeinrichtung vor, die ein den Schwimmer untergreifendes Löseelement und ein in einem oberen, beispielsweise über eine Öffnung im Abscheidebecken zugänglichen Handgriff endendes Zugseil aufweist. Das Zugseil ist bevorzugt durch den Zwischenraum zwischen dem Schwimmer und dem Ablaufsteigrohr hindurch geführt, wobei es als Löseelement einen Querstab od. dgl. trägt, der frei nach unten bis unter die tiefste Schwimmerstellung hängt und den Zwischenraum nicht passieren kann. Wird das Löseelement hochgezogen, so legt es sich an den Schwimmer an, der an den beiden Hebeln nach oben schwenkt, wobei die Verbindungsstangen das Sperrelement nach unten drücken. Wenn eine Verlängerung des vertikalen Ablaufsteigrohres oberhalb des seitlichen Abflußstutzens ausgebildet ist, beispielsweise für Inspektions- und Reinigungszwecke, so ist alternativ auch eine Öffnung des Sperrelementes durch eine durch das Ablaufsteigrohr eingeführte Schubstange od. dgl. denkbar

Beim Einbau einer erfindungsgemäßen Sperreinrichtung in einen Leichtflüssigkeitsabscheider befindet sich das Sperrelement ebenfalls in Schließstellung, da der Schwimmer in seiner tiefsten Lage hängt. Bei der Erstflutung ist daher ebenfalls eine Öffnung des Sperrelementes durch äußere Einflüsse, beispielsweise durch Anheben des Löseelementes vonnöten. Um dies zu vermeiden, kann in einer weiteren bevorzugten Ausführung eine Montageverriegelung vorgesehen sein, die das Sperrelement in seiner offenen Position hält, und sich löst, sobald der Schwimmer vom steigenden Wasser angehoben wird. Die Montageverriegelung weist beispielsweise pro Hebel einen am Ablaufsteigrohr unterhalb des Hebel angeordnete Haken und eine an einem Seil montierte Öse auf, die in den Haken eingehängt ist, wobei das Seil im Bereich der Verbindungsstangen am Hebel fixiert ist.

Eine weitere bevorzugte Ausführung sieht die Einrichtung in einem montagegefertigten Einbaugehäuse vor, das beispielsweise an einer Wand des Abscheidebeckens montierbar ist, wobei jede wasserdurchlässige Seitenwand eine Filterschicht aufweist.

Nachstehend wird nun die Erfindung an Hand der Figuren der beiliegenden Zeichnung näher beschrieben, ohne darauf beschränkt zu sein.

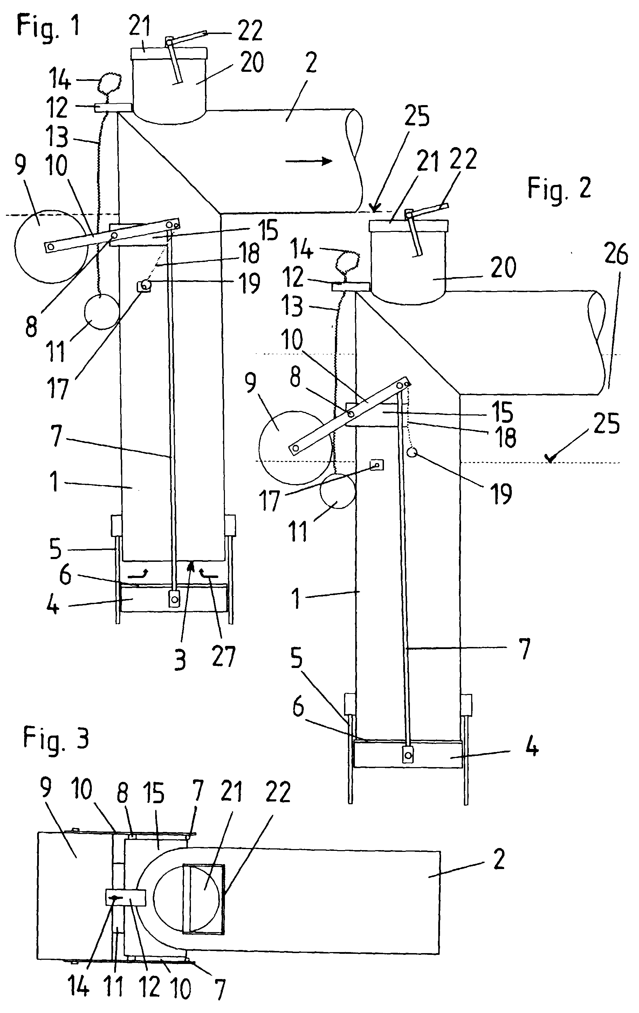

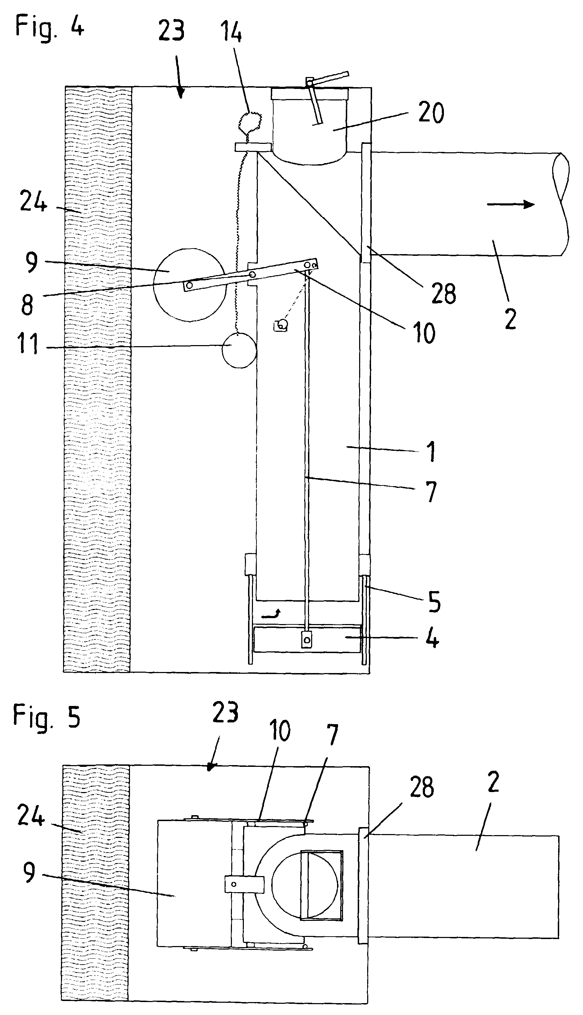

Die Fig. 1 zeigt eine Seitenansicht der erfindungsgemäßen Einrichtung in geöffnetem Zustand, die Fig. 2 in geschlossenem Zustand, die Fig. 3 eine Draufsicht auf die Einrichtung gemäß Fig. 2, die Fig. 4 eine Seitenansicht der mit einem Einbaugehäuse versehenen Ausführung nach Fig. 1 und Fig. 5 eine Draufsicht gemäß Fig. 3.

Eine erfindungsgemäße Einrichtung ist zur Sperre des Wasserablaufes aus einem Leichtflüssigkeitsabscheidebecken vorgesehen, wenn, wie aus Fig. 2 ersichtlich, die Dicke der Leichtflüssigkeitsschicht 26 ein Ausmaß erreicht, das die Wasseroberfläche 25 auf eine minimale Höhe abgesenkt hat, unterhalb der die Funktion der Leichtflüssigkeitsabscheidung in Frage gestellt ist, und bei der spätestens die Leichtflüssigkeit entfernt werden muß. Die Einrichtung umfaßt ein vertikales Ablaufsteigrohr 1 mit anschließendem Abflußstutzen 2, der die maximale Höhe der Wasseroberfläche 25 vorgibt (Fig. 1).

Die nach unten offene Eintrittsöffnung 3 des Ablaufsteigrohres 1 liegt unterhalb der minimalen Wasseroberfläche 25, sodaß in jedem Fall nur Wasser in das Ablaufsteigrohr 1 einfließen kann (Pfeile 27). Unterhalb der Eintrittsöffnung 3 ist ein mit einer Dichtung 6 versehenes Sperrelement 4 vorgesehen. Am unteren Ende des Ablaufsteigrohres 1 sind Laschen 5 angeordnet, die nach unten vorstehen und das darunter liegende Sperrelement 4 umfangsseitig führen. Das Sperrelement 4 ist an zwei Verbindungsstangen 7 angelenkt, die außerhalb des Ablaufsteigrohres 1 nach oben geführt und an den zweiten Enden zweier Hebel 10 einer zweiarmigen Hebelanordnung angelenkt sind. Die beiden zueinander parallelen Hebel 10 sind um Achsen 8 schwenkbar gelagert, die an einem am Ablaufsteigrohr 1 montierten Halteteil 15 angeordnet sind, und tragen zwischen den ersten Enden einen Schwimmer 9. Aufgrund dieser Anordnung wird das Sperrelement 4 beim Absinken des Schwimmers 9 aus der Normalstellung von Fig. 1 in die Minimalstellung der Fig. 2 angehoben und verschließt die Eintrittsöffnung 3.

Um nach der Montage der Einrichtung im leeren Abscheider das Sperrelement 4 geöffnet zu halten, ist am Ablaufsteigrohr 1 ein Haken 17 vorgesehen, in den eine an einem Seil oder einer Kette 18 montierte Öse 19 eingehängt ist, wie in Fig. 1 gezeigt. Sobald der Schwimmer 9 bei der Erstfüllung des Abscheiders aufschwimmt, hakt sich die Öse 19 aus dem Haken 17 aus und der mit dem Seil 18 verbundene Arm des Hebels 10 wird freigegeben. Dies geschieht selbsttätig, da der Haken 17 relativ zum Hebel 10 aus der Lotrechten versetzt ist.

Wenn das Ablaufsteigrohr 1 durch das Sperrelement 4 geschlossen ist, muß die Leichtflüssigkeit 26 entfernt werden, bevor weiteres Wasser in den Abscheider einfließen kann. Dabei fließt etwas Wasser aus dem Ablaufsteigrohr 1 zurück, sodaß nach der Wiederfüllung aufgrund des hydrostatischen Druckunterschiedes das Sperrelement 4 nicht von selbst öffnen kann, sondern willkürlich geöffnet werden muß. (Dies stellt im übrigen auch die Entnahme der Leichtflüssigkeit sicher.) Die Einrichtung ist daher mit einer Schließstellungslöseeinrichtung versehen, die ein unterhalb des Schwimmers 9 frei angeordnetes Löseelement 11 und ein zwischen dem Schwimmer 9 und dem Ablaufsteigrohr 1 durch eine obere Lasche 12 nach oben geführtes und mit einem Handgriff 14 versehenes Seil 13 aufweist. Das Löseelement 11 ist beispielsweise als Querstab ausgebildet, und größer als der Spalt zwischen dem Schwimmer 9 und dem Ablaufsteigrohr 1. Dadurch untergreift das Löseelement 11 den Schwimmer 9 nur beim Hochziehen, wobei das Sperrelement 4 nach unten gedrückt wird.

Das Ablaufsteigrohr 1 weist einen oberen Stutzen 20 auf, der durch einen mit einer Verriegelung 22 versehenen Deckel 21 verschlossen ist. Das Sperrelement 4 könnte daher nach Öffnen des Deckels 21 auch durch eine Stange od. dgl. nach unten gedrückt werden, sodaß weder die Montageverriegelung 17, 18, 19 noch die Schließstellungslöseeinrichtung 11, 12, 13, 14 unbedingt erforderlich sind.

Fig. 4 und 5 zeigen schematisch eine in einem Einbaugehäuse 23 angeordnete Einrichtung zur Sperre des Wasserablaufes, das mit einer an der Wand des Abscheidebeckens fixierbaren Montageplatte 28 od. dgl. versehen ist. Zumindest eine Seitenwand des Gehäuses 23 muß wasserdurchlässig sein und ist als Filter 24 ausgebildet.

## Patentansprüche

1. Einrichtung zur Sperre des Wasserablaufes eines Leichtflüssigkeitsabscheiders, mit einer Wassereintrittsöffnung (3) am unteren Ende eines Ablaufsteigrohres (1), mit einem neben dem Ablaufsteigrohr (1) angeordneten Schwimmer (9) und mit einem mit dem Schwimmer (9) verbundenen Sperrelement (4), das unterhalb der Wassereintrittsöffnung (3) angeordnet ist und diese verschließt, wenn eine maximale Dicke der Leichtflüssigkeitsschicht (26) erreicht ist, dadurch gekennzeichnet, daß am Ablaufsteigrohr (1) eine zweiarmige Hebelanordnung vorgesehen ist, an der der Schwimmer (9) und das Sperrelement (4) angeordnet sind.

2. Einrichtung nach Anspruch 1, dadurch gekennzeichnet, daß die zweiarmige Hebelanordnung zwei am Ablaufsteigrohr (1) zueinander parallel angelenkte Hebel (10) aufweist, zwischen deren ersten Enden der Schwimmer (9) angeordnet ist, und an deren zweiten Enden sich im wesentlichen vertikal nach unten erstreckende Verbindungsstangen (7) angelenkt sind, an denen das Sperrelement (4) angeordnet ist.

3. Einrichtung nach Anspruch 2, dadurch gekennzeichnet, daß das Sperrelement (4) an vom Umfang des Ablaufsteigrohres (1) nach unten abstehenden Laschen (5) geführt ist.

4. Einrichtung nach einem der Ansprüche 1 bis 3, dadurch gekennzeichnet, daß die Oberseite des Sperrelementes (4) zumindest im Randbereich mit einem Dichtstreifen (6) aus einem elastisch nachgiebigen Material versehen ist.

5. Einrichtung nach einem der Ansprüche 1 bis 4, dadurch gekennzeichnet, daß dem Sperrelement (4) eine Schließstellungslöseeinrichtung zugeordnet ist, die ein den Schwimmer untergreifendes Löseelement (11) und ein in einem oberen Handgriff (14) endendes Zugseil (13) aufweist.

6. Einrichtung nach Anspruch 5, dadurch gekennzeichnet, daß das Löseelement (11) durch einen Querstab gebildet ist, und das Zugseil (13) zwischen den zueinander parallelen Hebeln (10) hindurch geführt ist.

7. Einrichtung nach einem der Ansprüche 1 bis 6, dadurch gekennzeichnet, daß zumindest einem der beiden Hebel (10) eine Montageverriegelung zugeordnet ist, die sich bei der Erstflutung des Leichtflüssigkeitsabscheiders selbsttätig löst.

8. Einrichtung nach Anspruch 7, dadurch gekennzeichnet, daß die Montageverriegelung pro Hebel (10) einen am Ablaufsteigrohr (1) unterhalb des Hebels (10) angeordneten Haken (17) und eine an einem Seil (18) montierte Öse (19) aufweist, wobei das Seil (18) im Bereich der Verbindungsstangen (7) am Hebelarm (10) fixiert ist.

9. Einrichtung nach einem der Ansprüche 1 bis 8, dadurch gekennzeichnet, daß sie in einem Einbaugehäuse (23) angeordnet ist, in dem jede wasserdurchlässige Seitenwand eine Filterschicht (24) aufweist.
